(19) Europäisches Patentamt / European Patent Office / Office européen des brevets

(11) **EP 2 896 940 B1**

(12) **EUROPEAN PATENT SPECIFICATION**

(45) Date of publication and mention
of the grant of the patent:
**24.04.2019 Bulletin 2019/17**

(51) Int Cl.:
*G01J 1/46* *(2006.01)*      *G01J 3/28* *(2006.01)*
*G01J 3/42* *(2006.01)*

(21) Application number: **14151773.0**

(22) Date of filing: **20.01.2014**

(54) **Differential photodiode integrator circuit for absorbance measurements**

Differentielle Photodioden-Integratorschaltung für Absorbanzmessungen

Circuit intégrateur de photodiode différentiel pour mesures d'absorbance

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.07.2015 Bulletin 2015/30**

(73) Proprietor: **Molecular Devices, LLC**
**San Jose, CA 95134 (US)**

(72) Inventors:
• **Atzler, Josef J.**
**5400 Hallein (AT)**

• **Schinwald, Bernhard**
**5222 Munderfing (AT)**

(74) Representative: **Mollekopf, Gerd Willi**
**Kahler Käck Mollekopf**
**Partnerschaft von Patentanwälten mbB**
**Vorderer Anger 239**
**86899 Landsberg/Lech (DE)**

(56) References cited:
**GB-A- 2 089 028      GB-A- 2 343 943
US-A1- 2013 082 179**

**Description**

**TECHNICAL FIELD**

This present invention generally relates to light-sensing measurement systems, and more particularly, to systems and methods using photodetector integrator circuits.

**BACKGROUND**

Photodetectors are devices used to receive a light signal and to generate an electrical signal indicative of the light signal intensity. Examples of photodetectors include a photodiode, a photomultiplier tube ("PMT"), an avalanche photodiode, and other light-detecting devices. Typically, the photodiode generates a current that corresponds to the intensity of light it receives. Photodiodes and other photodetectors typically use an integrating circuit to translate the current received into a voltage signal that is indicative of the intensity or power of the light over a period of time. Integration circuits are well known and operational amplifier ("op-amp") circuits that integrate an input signal are well known. Integrator circuits have been employed to receive the photodiode current level and to generate a voltage value indicative of the integral of the current over a period of time.

Systems that employ photodetectors and integrator circuits are evolving into systems that are more general or open in implementation. That is, such measurement circuits are now required to process more general light inputs. Accordingly, the measurement circuits may need to provide signal-to-noise ratios ("SNR") and dynamic ranges that are adequate for a variety of scenarios. In an absorption measurement system, a typical integrator circuit may not be sufficient to provide satisfactory SNR to exceed a 4OD ("optical density") dynamic range over given wavelength range (200-1000nm); particularly if weak flash lamps are used. The absorbance measurement systems may include optical components (light source, lenses, mirrors, gratings etc.) in the light path for the light to be measured that have a varying optical behavior over the desired wavelength range. This variability may result in different SNR values depending on the selected wavelength.

Accordingly, the dynamic range of 4OD, which may often be the desired dynamic range, may only be reached using additional electronics such as, for example, programmable amplifiers and/or avalanche photodiode (APD) detectors. The use of additional electronics results in time consuming adjustment routines during manufacturing, which may also impact the flexibility of the system. In addition, APDs may be too expensive and overly sensitive to the ambient environment.

In view of the above, there is a need in the art for light measurement systems that permit variably fast adjustment of the light source output and of the dynamic range of the signal measurement.

The photodiode detection circuit of GB 2 343 943 A includes a transimpedance amplifier where the anode and cathode of a photodiode are each connected to a separate differentiating structure, each based on an operational amplifier. The output of the differentiating structure is input to a differential amplifier for providing the differential signal. The transimpedance amplifier is used for transforming optical digital signals transmitted over an optical fiber into an electrical digital signal.

US 2013/0082179 A1 suggests a transimpedance circuit for detecting and amplifying the electrical signal provided from a pyroelectric element. The pyroelectric element is used to transform infrared signals emitted from a human body. As in this IR range, which can be denoted as a heat signal of the object, any time-variant heat sources at the detector side represents a source of error, it is suggested to use the transimpedance circuit to improve the S/N ratio. In one embodiment the operational amplifiers connected to the cathode and anode of the pyroelectric element are designed as integrators. The capacitor of the integrating operational amplifiers are reset or discharged under the control of a pulsed signal generated by an oscillator.

The dual beam spectrometer provided in GB 2 089 028 A is used for detecting absorbance by a sample and detecting a reference absorbance. The light is detected using a photomultiplier as detector. The signal from the photomultiplier is input to an operational amplifier arranged as an integrating structure. The capacitor of the operational amplifier is shortened by a switch that is switched according to signals provided by a switch control unit.

**SUMMARY**

The invention is defined in claims 1 and 9, respectively.

Particular embodiments are set out in the dependent claims.

To address the foregoing problems, in whole or in part, and/or other problems that may have been observed by persons skilled in the art, the present disclosure provides a photodetector measurement circuit, a detection system and a method as described by way of example in implementations set forth below.

A detection system is provided for measuring a light intensity. The detection system comprises: an absorbance detection system configured to generate a light having a light intensity indicative of an absorbance by a sample in response to an excitation light; a plurality of optical components configured to provide an optical path from the sample to a photodetector measurement circuit. The photodetector measurement circuit comprises a photodetector that receives a light and generates a photodetector current indicative of the light intensity. The measurement circuit includes a first integrator coupled along a first signal path to the photodetector to generate a first voltage signal at a first integrator output indicative of an integral of the photodetector current level. A second integrator is configured to generate a second voltage signal at a second integrator output indicative of an integral of the photodetector current level. A differential amplifier receives the first voltage signal and the second voltage signal and generates a third output signal at a differential amplifier output indicative of a difference between the first voltage signal and the second voltage signal. The differential amplifier outputs the third voltage signal to an analog-to-digital conversion function ("ADC function") input.

The photodetector measurement circuit of the detection system may be configured according to the embodiments set out below and in the claims of the photodetector measurement circuit.

According to another aspect of the invention a method is provided as defined in claim 9. The method may be operated on a photodetector measurement circuit or detection system embodied and as set out below or in any of the circuit or system claims.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

## BRIEF DESCRIPTION OF THE DRAWINGS

The invention can be better understood by referring to the following figures. The components in the figures are not necessarily to scale, emphasis instead being placed upon illustrating the principles of the invention. In the figures, like reference numerals designate corresponding parts throughout the different views.

Fig. 1    is a block diagram of an example of a system for measuring a light level.

Fig. 2    is a schematic diagram of an example implementation of a circuit for measuring a light level according to the system in Fig. 1.

Fig. 3    is a schematic view of a photodetector connected to a single integrator circuit.

Figs. 4A and 4B    are diagrams illustrating differences in performance between the example implementation in Figure 2 and the single integrator circuit in Fig. 3.

## DETAILED DESCRIPTION

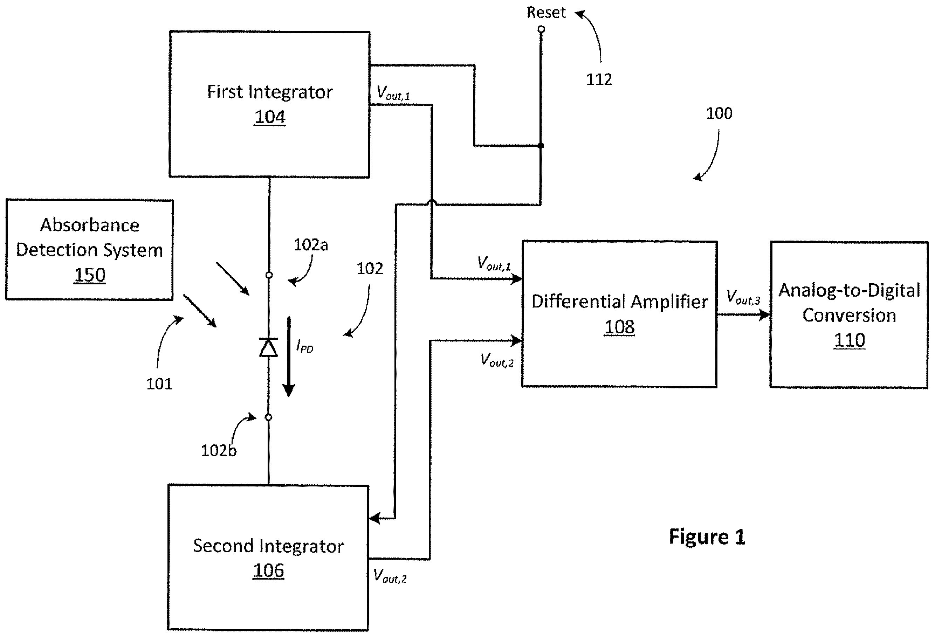

Figure 1 is a block diagram of an example system **100** for measuring a light level using a photodetector **102.** The system **100** includes a first integrator circuit **104,** a second integrator circuit **106,** a differential amplifier **108,** and an analog-to-digital conversion ("ADC") function **110.** The system **100** may be used in a detection system or light measurement system in which meaningful information may be obtained from the intensity of a light **101** directed at the photodetector **102.** For example, the system **100** may be implemented as a component in an absorbance detection system **150.** The absorbance detection system **150** may include an excitation light source directed by an optical path configured using optical components such as mirrors, lenses, beam splitters, and other suitable components that may direct the light source to a sample. The sample may absorb a portion of the excitation light and transmit a remaining part of the excitation light. The excitation light may have an intensity that is either known or measured using another light measurement circuit. The transmitted light emitted from the sample (shown in Figure 1 as the light **101**) may be directed to the photodetector **102** for measurement of its light intensity. By measuring the light intensity of the transmitted light **101,** and using the known intensity of the excitation light, the intensity of the light that was absorbed by the sample may be determined. The light intensity absorbed by the sample may provide desired information about the sample.

Descriptions of examples herein focus on photodetectors used for absorbance measurements. However, examples of implementations of the systems and methods described herein may be adapted for use in any system in which a photodetector generates an electrical signal that is measurable across opposite terminals in response to being illuminated by a light.

The photodetector **102** is described herein as being a photodiode for purposes of illustration. Those of ordinary skill in the art will understand that other photosensitive devices where an electrical signal is generated across two terminals in response to a light may be used as the photodetector **102** as well. Examples of other light-sensitive devices that may be used include a PMT and an avalanche photodiode. It is noted that PMTs and avalanche photodiodes are typically packaged as devices having more than two pins, and may require a power capacity different from that of a photodiode. Those of ordinary skill in the art will understand the differences between these light-sensitive devices and the photodiodes referred to in this description as well as how to configure these and any other suitable light-sensitive devices for operation as 'photodetectors' in the context of this disclosure.

Referring to Figure 1, the photodetector **102** receives the light **101** and generates a photodetector current, $I_{PD}$, that flows from a first terminal **102a** to a second terminal **102b** as shown in Figure 1. The photodetector **102** may be connected to the first integrator **104** at the first photodetector terminal **102a** and to the second integrator **106** at the second photodetector terminal **102b**. The photodetector current $I_{PD}$, is detected by the first integrator **104** and by the second integrator **106** via their respective connections to the first and second photodiode terminals **102a** and **102b,** respectively.

In general, the light **101** may illuminate the photodetector **102** in light pulses where an individual light pulse begins to illuminate the photodetector **102** at a pulse start time. The photodetector **102** senses the light intensity and responsively generates the photodetector current, $I_{PD}$, at a level corresponding to light intensity as the light **101** continues to illuminate the photodetector **102**. The photodetector **102** continues to generate the photodetector current according to the light intensity until the pulse end time, which is the time at which the light pulse ends and the light intensity goes to substantially zero. The light pulse may be characterized as having a period $t$, which is the elapsed time between the pulse start time and the pulse end time. The light pulses may also be separated by periods of no light according to a duty cycle of the excitation light.

The first integrator circuit **104** and the second integrator circuit **106** may be typical analog integrator circuits that generate an electrical output signal representing an integral of the input electrical signal. The first integrator circuit **104** and the second integrator circuit **106** perform substantially simultaneous integrations on the photodetector current level of the photodetector current, $I_{PD}$, over the period, t, of the light pulse. At the end of the period $t$, an integrator output signal indicates the integration of the current level of the photodetector current, $I_{PD}$, over the period of time t. The first integrator circuit **104** and the second integrator circuit **106** connect to opposite terminals of the photodetector **102** and generate an output voltage signal representing the integral of the photodetector current, $I_{PD}$, as detected from opposite sides of the photodetector **102**. The first integrator **104** generates a first voltage signal, $V_{out,1}$, and the second integrator **106** generates a second voltage signal, $V_{out,2}$. As configured, the first integrator circuit **104** and the second integrator circuit **106** provide output signals $V_{out,1}$ and $V_{out,2}$ where: $V_{out,2} = -V_{out,1}$, and $|V_{out,1}| = |V_{out,2}|$; and where it is noted that component tolerances and differences in the component characteristics are ignored.

The output signals $V_{out,1}$ and $V_{out,2}$ are communicated to the inputs of the differential amplifier **108**. The differential amplifier **108** generates an output representing the difference between the two input signals. For the example illustrated in Figure 1, the differential amplifier **108** output is a third voltage signal, $V_{out,3}$ where:

$$V_{out,3} = V_{out,1} - V_{out,2} = V_{out,1} - (-V_{out,1}) = V_{out,1} + V_{out,1} = 2 * V_{out,1}.$$

The third voltage signal, $V_{out,3}$, of the differential amplifier **108** is communicated to the ADC function **110,** which may include an n-bit ADC for converting the third voltage signal, $V_{out,3}$, to an n-bit digital value. The n-bit digital value of the third voltage signal may then be input to a controller to provide to a function that processes and analyzes n-bit digital values for information about the sample. For example, the absorbance detection system **150** may perform data analysis using the n-bit digital values collected for absorbance measurements taken by the photodetector **102** and the system **100** in Figure 1 in running diagnostic assays. The diagnostic assays may be configured for purposes of determining, for example, the quantity of a target analyte in the sample.

The system **100** in Figure 1 may include a reset signal input **112** for receiving a reset signal from a process that controls the operation of the system **100** in Figure 1. For example, the process (not shown) may receive a trigger, or some input signal indicating when the analog-to-digital conversion has been completed by the ADC function **110**. The process may then generate the reset signal, which is communicated to the first integrator circuit **104** and the second integrator circuit **106**. The reset signal triggers a reset of the first integrator circuit **104** and the second integrator circuit **106** permitting the first integrator circuit **104** and the second integrator circuit **106** to restart a next integration when a next light pulse is received at the photodetector **102**.

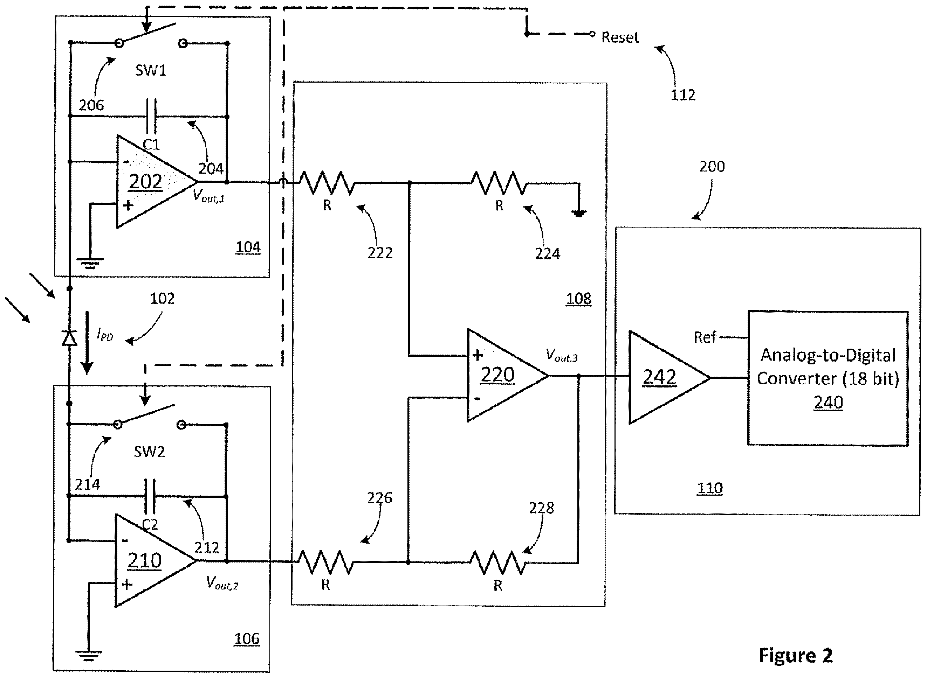

Figure 2 is a schematic diagram of an example implementation of a differential integrator circuit **200** for measuring a light level according to the system in Figure 1. As shown in Figure 2, the first integrator **104** includes a first operational amplifier ("op-amp") **202,** a first feedback capacitor **204,** and a first integrator switch **206**. Similarly, the second integrator **106** includes a second op-amp **210,** a second feedback capacitor **212,** and a second integrator switch **214**. The first photodetector terminal **102a** of the photodetector **102** is connected to a negative input terminal of the first op-amp **202** in the first integrator **104**. The second terminal **102b** of the photodetector **102** is connected to the negative terminal of the second op-amp **210** in the second integrator **106.**

The first feedback capacitor **204** includes a first capacitor lead connected to the negative input terminal of the first op-amp **202** and a second capacitor lead connected to an output terminal of the first op-amp **202.** The second feedback capacitor **212** includes a capacitor lead connected to the negative input terminal of the second op-amp **210** and a second capacitor lead connected to an output terminal of the second op-amp **210.**

The transfer function of the first integrator circuit **104** as shown in Figure 2 may be expressed as:

$$V_{out,1} = \frac{1}{C_1} \int I_{PD}(t) dt,$$

where $C_1$ is the capacitance of the first feedback capacitor **204.** The transfer function of the second integrator circuit **106** as shown in Figure 2 may be expressed as:

$$V_{out,2} = \frac{1}{C_2} \int -I_{PD}(t) dt,$$

where $C_2$ is the capacitance of the second feedback capacitor **212.** The first feedback capacitor **204** and the second feedback capacitor **212** in the differential integrator circuit **200** in Figure 2 are selected to have the same capacitance value: $C_1 = C_2$ for the example shown in Figure 2. This results in $V_{out,2} = -V_{out,1}$, and $|V_{out,1}| = |V_{out,2}|$ as described above with reference to Figure 1.

The differential amplifier **108** in Figure 2 includes a differential amplifier op-amp **220,** a first voltage divider formed by a first resister **222** and a second resister **224,** and a second voltage divider formed by a third resister **226** and a fourth resister **228.** The first voltage divider is connected to the positive input of the differential amplifier op-amp **220** at the node between the first resistor **222** and the second resistor **224.** The first resistor **222** connects to an input of the differential amplifier **106,** which connects to receive the first voltage signal $V_{out,1}$. The second voltage divider is connected to the negative input of the differential amplifier op-amp **220** at the node between the third resistor **226** and the fourth resistor **226.** The third resistor **224** connects to an input of the differential amplifier **106,** which connects to receive the second voltage signal $V_{out,2}$. In operation, the differential amplifier op-amp **220** generates a third voltage signal $V_{out,3}$, as the difference between the first voltage signal $V_{out,1}$ and second voltage signal $V_{out,2}$.

The third voltage signal $V_{out,3}$ is communicated to the ADC function **110.** The ADC function **110** includes an 18-bit analog-to-digital convertor ("ADC") **240** and an ADC driver **242.** It is to be understood by those of ordinary skill in the art that the 18-bit ADC is used as an example for an n-bit ADC. The third voltage signal $V_{out,3}$ is communicated to the ADC driver **242,** which may be a driver, or an amplifier provided to scale the value for range of the ADC **240.** The third voltage signal $V_{out,3}$ is converted to a digital value, an 18-bit value in the example in Figure 2, which may then be processed to determine the desired information from the measurement.

The first integrator switch **206** is connected in parallel with the first feedback capacitor **204** to short the first feedback capacitor **204** when the first integrator switch **206** is closed. The second integrator switch **214** is connected in parallel with the second feedback capacitor **212** to short the second feedback capacitor **212** when the second integrator switch **214** is closed. The first integrator switch **206** and the second integrator switch **214** are triggered to close by the reset signal **112.** The reset signal **112** may be generated by a controller or another circuit configured to control the measurement of light by the differential integrator circuit **200.** The reset signal **112** may be generated at the conclusion of a conversion of the third output voltage to the digital value to enable another integration to begin for a next light pulse.

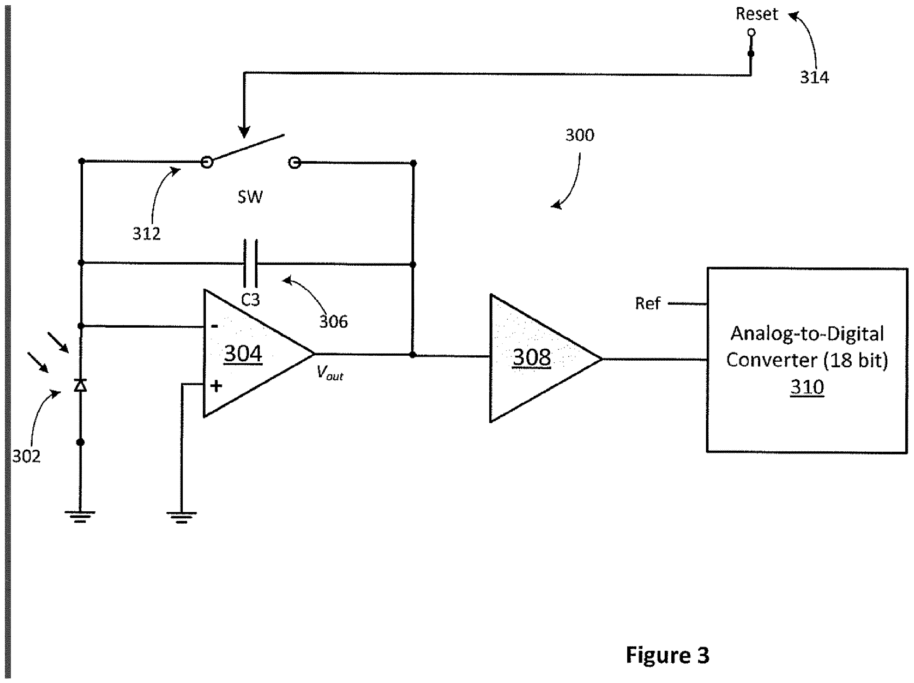

The differential integrator circuit **200** in Figure 2, which is an example of the system **100** in Figure 1, provides light measurements with a significantly improved dynamic range and signal-to-noise ratio ("SNR"). The improvements in both dynamic range and SNR may become apparent by comparison with a typical photodiode integrator circuit. Figure 3 is a schematic view of a photodetector connected to a single integrator circuit of a type typically used to make light measurements with the photodetector. The circuit **300** in Figure 3 includes a photodiode **302,** an integrator op-amp **304,** a feedback capacitor **306,** a switch **312,** an ADC driver **308** and an n-bit ADC **310.** The photodiode integrator circuit **300** in Figure 3 operates, as is well known to those of ordinary skill in the art, according to the transfer function:

$$V_{out} = \frac{1}{C_3} \int I_{PD}(t) dt.$$

The dynamic range of the photodiode integrator circuit 300 in Figure 3 is limited by a DC offset due to a parasitic charge on the feedback capacitor **306** that is injected on the input of the integrator op-amp **304** when the switch SW **312** is opened. In contrast, referring to the differential integrator circuit **200** in Figure 2, the offset voltages caused by the opening of the first integrator switch SW1 **206** and the second integrator switch SW2 **214,** are subtracted by the differential amplifier **108**. The resulting offset that remains at the third voltage signal $V_{out3}$ is very small. This translates to a much improved dynamic range compared to that of the typical photodiode integrator **300**.

With respect to a desired SNR, the noise added by the photodiode integrator **300** must be a very small value. The photodiode integrator **300** typically produces noise at the photodiode **302,** the integrator op-amp **304,** and the switch **312**. The feedback capacitor $C_3$ **306** operates to limit the noise amplitude. Accordingly, a larger capacitance value $C_3$ would help reduce the noise contributed by the photodiode integrator **300**. However, if the capacitance value $C_3$ is too high, the output voltage $V_{out}$ is limited in magnitude according to the transfer function for $V_{out}$ above. The integration time is limited by duration of as flash, or the period of the light pulse, t, and the current $I_{PD}$ is a function of the photodiode sensitivity at a certain wavelength and the photodiode input power.

Referring to the differential integrator circuit **200** in Figure 2, the photodetector current level, $I_{PD}$, charges two integration capacitors (first and second feedback capacitors **204** & **212)** simultaneously. In addition, the output voltages ($V_{out,1}$ and $V_{out,2}$) at both stages are added to one another. The essentially double output voltage signal generated at a constant light at the photodetector **102** may be compared to the single integrator operating in the photodiode integrator circuit **300** in Figure 3. In order to obtain a similar range of output voltages from integration, the feedback capacitor value, $C_1$, in the first integrator circuit 104, and the feedback capacitor value, $C_2$, in the second integrator circuit **106,** may each be doubled in order to generate the same output voltage value. For an differential integrator circuit **200** that is equivalent in output to the photodiode integrator circuit **300** in Figure 3, the feedback capacitance values may be adjusted as follows: $C_1=C_2=2C_3$, and $C_{sys}=C1+C2=4C3$. Therefore, the differential integrator circuit **200** reduces photodiode noise by incorporating 4x times the capacitance of the single integrator photodiode integrator circuit **300**. This results in a direct and significant improvement in the SNR delivered by the differential integrator circuit **200**.

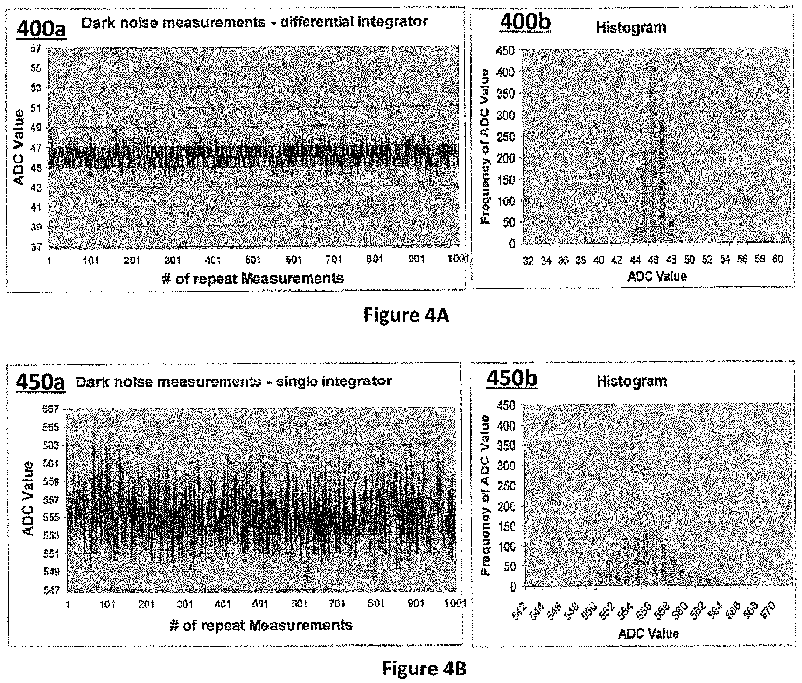

Figures 4A and 4B are diagrams graphically illustrating differences in performance between the example differential integrator circuit **200** in Figure 2 and the photodiode single integrator circuit **300** in Figure 3. The same scale is used for the diagrams and histograms generated for each implementation. Figure 4A illustrates results **400** in tests performed on an example implementation of the differential integrator circuit **200** in Figure 2. Figure 4B illustrates results **450** in tests performed on an example implementation of the photodiode integrator circuit **300** in Figure 3. The results **400** for the differential integrator circuit **200** demonstrate an improvement in noise performance by a factor of about 3.3, which is equivalent to a the performance of a conventional photodiode integrator **300** operating with about a 10x higher light input.

Figures 4A and 4B also provide an indication of the average ADC values obtained for the differential integrator circuit **200** and the photodiode integrator circuit **300,** respectively. The average ADC values represent the DC voltage offsets of each measurement system. As shown in Figure 4B, the average ADC value for the photodiode integrator circuit **300** is about 555 and the average ADC value for the differential integrator circuit **200** is about 46, representing an improvement in dynamic range.

It will be understood that various aspects or details of the invention may be changed without departing from the scope of the invention. Furthermore, the foregoing description is for the purpose of illustration only, and not for the purpose of limitation-the invention being defined by the claims.

**Claims**

1.  A detection system (100) comprising:

    an absorbance detection system (150) configured to generate a light having a light intensity indicative of an absorbance by a sample in response to an excitation light; and
    a plurality of optical components configured to provide an optical path from the sample to a photodetector measurement circuit comprising:

    a photodetector (102) configured to receive a light (101) having a light intensity and to generate a photodetector current with a current level indicative of the light intensity, the photodetector having a first terminal (102a) and a second terminal (102b) where the photodetector current flows through the photodetector from the first terminal towards the second terminal;
    **characterized in that** the photodetector (102) further comprises:

    a first integrator (104) coupled along a first signal path to the first terminal (102a) of the photodetector (102), where the first integrator is configured to generate a first voltage signal at a first integrator output indicative of an integral of the photodetector current level;

a second integrator (106) coupled along a second signal path to the second terminal (102b) of the photodetector (102), where the second integrator is configured to generate a second voltage signal at a second integrator output indicative of an integral of the photodetector current level; and

a differential amplifier (108) configured to receive the first voltage signal at a first differential amplifier input, to receive the second voltage signal at a second differential amplifier input, and to generate a third output signal at a differential amplifier output indicative of a difference between the first voltage signal and the second voltage signal, where the differential amplifier (108) is further configured to output the third voltage signal along a fifth signal path to an analog-to-digital conversion function input, wherein the photodetector (102) is a photodiode.

2. The detection system (100) of claim 1, further comprising a reset input connection (112) connected along a reset signal path to a first integrator switch (206) configured to reset the first integrator (104), and to a second integrator switch (214) configured to reset the second integrator (106) when a reset signal is generated on the reset input connection (112).

3. The detection system (100) of claim 1 or 2, where:

the first integrator (104) includes a first integrator operational amplifier (202) coupled to the first terminal (102a) of the photodetector (102) via the first signal path at a negative terminal of the first integrator operational amplifier, the first integrator operational amplifier comprising a first operational amplifier output in signal connection with the first integrator output; and

the second integrator (106) includes a second integrator operational amplifier (210) coupled to the second terminal (102b) of the photodetector (102) via the second signal path at a negative terminal of the second integrator operational amplifier, the second integrator operational amplifier comprising a second operational amplifier output in signal connection with the second integrator output.

4. The detection system (100) of claim 3, where:

the first integrator (104) includes a first feedback capacitor (C1) coupled to the negative terminal of the first integrator operational amplifier (202) at a first capacitor lead and to the first operational amplifier output at a second capacitor lead, the first feedback capacitor having a selected capacitance; and

the second integrator (106) includes a second feedback capacitor (C2) coupled to the negative terminal of the second integrator operational amplifier (210) at a first capacitor lead and to the second operational amplifier output at a second capacitor lead, the second feedback capacitor having approximately the same selected capacitance as the first feedback capacitor (C1).

5. The detection system (100) of claim 2 or 3, where:

the first integrator (104) includes a first feedback capacitor (C1) connected in parallel with the first integrator switch (206) that resets the first integrator, the first feedback capacitor comprising a first capacitor lead connected along a first operational amplifier feedback signal path to the negative terminal of a or the first integrator operational amplifier (202) and a first integrator switch terminal of the first integrator switch (206), and a second capacitor lead connected along the feedback signal path to the first operational amplifier output and a second integrator switch terminal of the first integrator switch, the first feedback capacitor (C1) having a selected capacitance; and

the second integrator (106) includes a second feedback capacitor (C2) connected in parallel with the second integrator switch (214) that resets the second integrator, the second feedback capacitor comprising a first capacitor lead connected along a second operational amplifier feedback signal path to the negative terminal of a or the second integrator operational amplifier (210) and a second integrator switch terminal of the second integrator switch, and a second capacitor lead connected along the second operational amplifier feedback signal path to the second operational amplifier output and a second integrator switch terminal of the second integrator switch, the second feedback capacitor (C2) having approximately the same selected capacitance as the first feedback capacitor.

6. The detection system (100) of any of the previous claims, where the differential amplifier (108) comprises a differential amplifier operational amplifier (220) comprising a positive input in signal communication with the first differential amplifier input and a negative input in signal communication with the second differential amplifier input.

**7.** The detection system (100) of claim 6, where:

the positive input of the differential operational amplifier (220) connects to the first differential amplifier input at a first voltage divider formed by a first and second resistor (222, 224); and

the negative input of the differential operational amplifier (220) connects to the second differential amplifier input at a second voltage divider formed by a third and fourth resistor (226, 228), where the first, second, third and fourth resistors have substantially the same resistance value.

**8.** The detection system (100) of any of the previous claims, where the analog-to-digital converter function includes an N-bit analog-to-digital converter (240) configured to generate an N-bit data word representing an analog value of the third output signal, wherein in particular the analog-to-digital converter function includes an analog-to-digital converter driver (242) configured to scale the analog value in accordance with a dynamic range of the N-bit analog-to-digital converter.

**9.** A method for measuring a light intensity level using a detection system (100), in particular a detection system according to any of the previous claims, the detection system comprising:

an absorbance detection system (150) configured to generate a light having a light intensity indicative of an absorbance by a sample in response to an excitation light;

a plurality of optical components configured to provide an optical path from the sample to a photodetector measurement circuit having a photodetector (102), the method comprising:

receiving a light signal at the photodetector (102); and

generating a photodetector current having a photodetector current level in response to the light signal intensity from a first photodetector terminal (102a) to a second photodetector terminal (102b);

**characterized in that** the method further comprises:

sensing the photodetector current at a first integrator input at the first photodetector terminal (102a);

generating a first output signal at a first integrator output, the first output signal indicative of an integral of the photodetector current level;

sensing the photodetector current at a second integrator input at the second photodetector terminal (102b);

generating a second output signal at a second integrator output, the second output signal indicative of an integral of the photodetector current level;

receiving the first output signal at a positive differential amplifier input and the second output signal at a negative differential amplifier input;

generating a third output signal indicative of the difference between the first output signal and the second output signal; and

outputting the third output signal to an analog-to-digital converter (110),

wherein the photodetector (102) is a photodiode.

**10.** The method of claim 9, further comprising:

generating a reset signal when the analog-to-digital converter (110) has generated a digital value corresponding to the third output signal; and

resetting the first and second integrators (104, 106) using the reset signal.

**11.** The method of claim 10, where the step of resetting the first and second integrators (104, 106) includes:

shorting a first feedback capacitor (C1) in the first integrator (104) by triggering a first integrator switch (206) closed; and

shorting a second feedback capacitor (C2) in the second integrator (106) by triggering a second integrator switch (214) closed.

**12.** The method of claim 9, 10 or 11, where the light signal is received as series of light pulses having a pulse time width, where:

the step of generating the photodetector current level includes beginning step of generating the photodetector current level at a beginning of one of the light pulses;
the steps of sensing the photodetector current level at the first and second integrators (104, 106) include initiating the steps of sensing the photodetector current levels at the beginning of the one of the light pulses;
the steps of generating the first and second output signals include generating the first and second outputs at a signal level corresponding to the first and second output signal levels present at a conclusion of the one of the light pulses; and
the sensing of the photodetector current level by the first and second integrators (104, 106) begin simultaneously with the beginning of the light pulse and the first and second output signals are generated simultaneously with the conclusion of the light pulse.

13. The method of any of claims 9 to 12, further comprising:

generating a reset signal when the analog-to-digital converter (110) has generated a digital value corresponding to the third output signal;
resetting the first and second integrators (104, 106) using the reset signal, where the reset signal is generated before receiving a next light pulse.

14. The method of any of claims 9 to 13, where the light pulses are generated by a sample in response to excitation by light received from a flash lamp.

**Patentansprüche**

1. Ein Detektionssystem (100), das aufweist:

ein Absorptionsgraddetektionssystem (150), das dazu ausgelegt ist, Licht mit einer Lichtintensität, die einen Absorptionsgrad durch eine Probe angibt, in Reaktion auf Anregungslicht zu erzeugen; und
eine Vielzahl von optischen Komponenten, die dazu ausgelegt sind, einen Strahlengang von der Probe zu einer Photodetektormessschaltung bereitzustellen, die aufweist:

einen Photodetektor (102), der dazu ausgelegt ist, Licht (101) mit einer Lichtintensität zu empfangen und einen Photodetektorstrom mit einem Strompegel zu erzeugen, der die Lichtintensität angibt, wobei der Photodetektor einen ersten Anschluss (102a) und einen zweiten Anschluss (102b) hat, wobei der Photodetektorstrom vom ersten Anschluss in Richtung des zweiten Anschluss durch den Photodetektor fließt;
**dadurch gekennzeichnet, dass** der Photodetektor (102) ferner aufweist:

einen ersten Integrator (104), der entlang eines ersten Signalpfades mit dem ersten Anschluss (102a) des Photodetektors (102) gekoppelt ist, wobei der erste Integrator dazu ausgelegt ist, ein erstes Spannungssignal an einem Ausgang des ersten Integrators zu erzeugen, das ein Integral des Photodetektorstrompegels angibt;
einen zweiten Integrator (106), der entlang eines zweiten Signalpfades mit dem zweiten Anschluss (102b) des Photodetektors (102) gekoppelt ist, wobei der zweite Integrator dazu ausgelegt ist, ein zweites Spannungssignal an einem Ausgang des zweiten Integrators zu erzeugen, das ein Integral des Photodetektorstrompegels angibt; und
einen Differenzverstärker (108), der dazu ausgelegt ist, das erste Spannungssignal an einem ersten Differenzverstärkereingang zu empfangen, das zweite Spannungssignal an einem zweiten Differenzverstärkereingang zu empfangen und ein drittes Ausgangssignal an einem Differenzverstärkerausgang zu erzeugen, das eine Differenz zwischen dem ersten Spannungssignal und dem zweiten Spannungssignal angibt, wobei der Differenzverstärker (108) ferner dazu ausgelegt ist, das dritte Spannungssignal entlang eines fünften Signalpfades an einen Analog-Digital-Umwandlungsfunktionseingang auszugeben,
wobei der Photodetektor (102) eine Photodiode ist.

2. Das Detektionssystem (100) nach Anspruch 1, das ferner eine Rücksetzeingangsverbindung (112) aufweist, die entlang eines Rücksetzsignalpfades mit einem Schalter (206) des ersten Integrators, der dazu ausgelegt ist, den ersten Integrator (104) zurückzusetzen, und mit einem Schalter (214) des zweiten Integrators, der dazu ausgelegt ist, den zweiten Integrator (106) zurückzusetzen, wenn ein Rücksetzsignal an der Rücksetzeingangsverbindung (112) erzeugt wird, verbunden ist.

3. Das Detektionssystem (100) nach Anspruch 1 oder 2, wobei:

der erste Integrator (104) einen ersten Integrator-Operationsverstärker (202) umfasst, der mit dem ersten Anschluss (102a) des Photodetektors (102) über den ersten Signalpfad an einem negativen Anschluss des ersten Integrator-Operationsverstärkers gekoppelt ist, wobei der erste Integrator-Operationsverstärker einen Ausgang des ersten Operationsverstärkers in Signalverbindung mit dem Ausgang des ersten Integrators aufweist; und
der zweite Integrator (106) einen zweiten Integrator-Operationsverstärker (210) umfasst, der mit dem zweiten Anschluss (102b) des Photodetektors (102) über den zweiten Signalpfad an einem negativen Anschluss des zweiten Integrator-Operationsverstärkers gekoppelt ist, wobei der zweite Integrator-Operationsverstärker einen Ausgang des zweiten Operationsverstärkers in Signalverbindung mit dem Ausgang des zweiten Integrators aufweist.

4. Das Detektionssystem (100) nach Anspruch 3, wobei:

der erste Integrator (104) einen ersten Rückkopplungskondensator (C1) umfasst, der mit dem negativen Anschluss des ersten Integrator-Operationsverstärkers (202) an einer ersten Kondensatorzuleitung und mit dem Ausgang des ersten Operationsverstärkers an einer zweiten Kondensatorzuleitung gekoppelt ist, wobei der erste Rückkopplungskondensator eine ausgewählte Kapazität hat; und
der zweite Integrator (106) einen zweiten Rückkopplungskondensator (C2) umfasst, der mit dem negativen Anschluss des zweiten Integrator-Operationsverstärkers (210) an einer ersten Kondensatorzuleitung und mit dem Ausgang des zweiten Integrators an einer zweiten Kondensatorzuleitung gekoppelt ist, wobei der zweite Rückkopplungskondensator ungefähr dieselbe ausgewählte Kapazität hat wie der erste Rückkopplungskondensator (C1).

5. Das Detektionssystem (100) nach Anspruch 2 oder 3, wobei:

der erste Integrator (104) einen ersten Rückkopplungskondensator (C1) umfasst, der mit dem Schalter (206) des ersten Integrators parallel geschaltet ist, der den ersten Integrator zurücksetzt, wobei der erste Rückkopplungskondensator eine erste Kondensatorzuleitung, die entlang eines Rückkopplungssignalpfades des ersten Operationsverstärkers mit dem negativen Anschluss eines oder des ersten Integrator-Operationsverstärkers (202) und einem Schalteranschluss des ersten Integrators des Schalters (206) des ersten Integrators verbunden ist, und eine zweite Kondensatorzuleitung, die entlang des Rückkopplungssignalpfades mit dem Ausgang des ersten Operationsverstärkers und einem Schalteranschluss des zweiten Integrators des Schalters des ersten Integrators verbunden ist, aufweist, wobei der erste Rückkopplungskondensator (C1) eine ausgewählte Kapazität hat; und
der zweite Integrator (106) einen zweiten Rückkopplungskondensator (C2) umfasst, der mit dem Schalter (214) des zweiten Integrators parallel geschaltet ist, der den zweiten Integrator zurücksetzt, wobei der zweite Rückkopplungskondensator eine erste Kondensatorzuleitung, die entlang eines Rückkopplungssignalpfades des zweiten Operationsverstärkers mit dem negativen Anschluss eines oder des zweiten Integrator-Operationsverstärkers (210) und einem Schalteranschluss des zweiten Integrators des Schalters des zweiten Integrators verbunden ist, und eine zweite Kondensatorzuleitung, die entlang des Rückkopplungssignalpfades des zweiten Operationsverstärkers mit dem Ausgang des zweiten Operationsverstärkers und einem Schalteranschluss des zweiten Integrators des Schalters des zweiten Integrators verbunden ist, aufweist, wobei der zweite Rückkopplungskondensator (C2) ungefähr dieselbe ausgewählte Kapazität wie der erste Rückkopplungskondensator hat.

6. Das Detektionssystem (100) nach irgendeinem der vorangehenden Ansprüche, wobei der Differenzverstärker (108) einen Differenzverstärker-Operationsverstärker (220) mit einem positiven Eingang in Signalkommunikation mit dem ersten Differenzverstärkereingang und einem negativen Eingang in Signalkommunikation mit dem zweiten Differenzverstärkereingang aufweist.

7. Das Detektionssystem (100) nach Anspruch 6, wobei:

der positive Eingang des Differenzoperationsverstärkers (220) mit dem ersten Differenzverstärkereingang an einem ersten Spannungsteiler verbindet, der durch einen ersten und einen zweiten Widerstand (222, 224) gebildet ist; und
der negative Eingang des Differenzoperationsverstärkers (220) mit dem zweiten Differenzverstärkereingang an einem zweiten Spannungsteiler verbindet, der durch einen dritten und einen vierten Widerstand (226, 228) gebildet ist, wobei der erste, der zweite, der dritte und der vierte Widerstand im Wesentlichen denselben Widerstandswert haben.

8. Das Detektionssystem (100) nach irgendeinem der vorangehenden Ansprüche, wobei die Analog-Digital-Wandlerfunktion einen N-Bit-Analog-Digital-Wandler (240) umfasst, der dazu ausgelegt ist, ein N-Bit-Datenwort zu erzeugen, das einen analogen Wert des dritten Ausgangssignals darstellt, wobei insbesondere die Analog-Digital-Wandlerfunktion einen Analog-Digital-Wandlertreiber (242) umfasst, der dazu ausgelegt ist, den analogen Wert gemäß einem dynamischen Bereich des N-Bit-Analog-Digital-Wandlers zu skalieren.

9. Ein Verfahren zum Messen eines Lichtintensitätspegels unter Verwendung eines Detektionssystems (100), insbesondere eines Detektionssystems nach irgendeinem der vorangehenden Ansprüche, wobei das Detektionssystem aufweist:

ein Absorptionsgraddetektionssystem (150), das dazu ausgelegt ist, Licht mit einer Lichtintensität, die einen Absorptionsgrad durch eine Probe angibt, in Reaktion auf Anregungslicht zu erzeugen;
eine Vielzahl von optischen Komponenten, die dazu ausgelegt sind, einen Strahlengang von der Probe zu einer Photodetektormessschaltung mit einem Photodetektor (102) bereitzustellen, wobei das Verfahren aufweist:

Empfangen eines Lichtsignals am Photodetektor (102); und
Erzeugen eines Photodetektorstroms mit einem Photodetektorstrompegel in Reaktion auf die Lichtsignalintensität von einem ersten Photodetektoranschluss (102a) zu einem zweiten Photodetektoranschluss (102b);
**dadurch gekennzeichnet, dass** das Verfahren ferner aufweist:

Erfassen des Photodetektorstroms an einem Eingang des ersten Integrators am ersten Photodetektoranschluss (102a);
Erzeugen eines ersten Ausgangssignals an einem Ausgang des ersten Integrators, wobei das erste Ausgangssignal ein Integral des Photodetektorstrompegels angibt;
Erfassen des Photodetektorstroms an einem Eingang des zweiten Integrators am zweiten Photodetektoranschluss (102b);
Erzeugen eines zweiten Ausgangssignals an einem Ausgang des zweiten Integrators, wobei das zweite Ausgangssignal ein Integral des Photodetektorstrompegels angibt;
Empfangen des ersten Ausgangssignals an einem positiven Differenzverstärkereingang und des zweiten Ausgangssignals an einem negativen Differenzverstärkereingang;
Erzeugen eines dritten Ausgangssignals, das die Differenz zwischen dem ersten Ausgangssignal und dem zweiten Ausgangssignal angibt; und
Ausgeben des dritten Ausgangssignals an einen Analog-Digital-Wandler (110),
wobei der Photodetektor (102) eine Photodiode ist.

10. Das Verfahren nach Anspruch 9, das ferner aufweist:

Erzeugen eines Rücksetzsignals, wenn der Analog-Digital-Wandler (110) einen digitalen Wert erzeugt hat, der dem dritten Ausgangssignal entspricht; und
Zurücksetzen des ersten und des zweiten Integrators (104, 106) unter Verwendung des Rücksetzsignals.

11. Das Verfahren nach Anspruch 10, wobei der Schritt des Zurücksetzens des ersten und des zweiten Integrators (104, 106) umfasst:

Kurzschließen eines ersten Rückkopplungskondensators (C1) im ersten Integrator (104) durch Auslösen eines Schalters (206) des ersten Integrators in die geschlossene Stellung; und
Kurzschließen eines zweiten Rückkopplungskondensators (C2) im zweiten Integrator (106) durch Auslösen eines Schalters (214) des zweiten Integrators in die geschlossene Stellung.

12. Das Verfahren nach Anspruch 9, 10 oder 11, wobei das Lichtsignal als Reihe von Lichtimpulsen mit einer Impulszeitbreite empfangen wird, wobei:

der Schritt des Erzeugens des Photodetektorstrompegels den Anfangsschritt des Erzeugens des Photodetektorstrompegels an einem Beginn von einem der Lichtimpulse umfasst;
die Schritte des Erfassens des Photodetektorstrompegels am ersten und zweiten Integrator (104, 106) das Einleiten der Schritte des Erfassens der Photodetektorstrompegel am Beginn des einen der Lichtimpulse umfassen;

die Schritte des Erzeugens des ersten und des zweiten Ausgangssignals das Erzeugen der ersten und der zweiten Ausgabe bei einem Signalpegel umfassen, der dem ersten und dem zweiten Ausgangssignalpegel entspricht, die an einem Ende des einen der Lichtimpulse vorhanden sind; und

das Erfassen des Photodetektorstrompegels durch den ersten und den zweiten Integrator (104, 106) gleichzeitig mit dem Beginn des Lichtimpulses beginnen und das erste und das zweite Ausgangssignal gleichzeitig mit dem Ende des Lichtimpulses erzeugt werden.

**13.** Das Verfahren nach einem der Ansprüche 9 bis 12, das ferner aufweist:

Erzeugen eines Rücksetzsignals, wenn der Analog-Digital-Wandler (110) einen digitalen Wert erzeugt hat, der dem dritten Ausgangssignal entspricht;

Zurücksetzen des ersten und des zweiten Integrators (104, 106) unter Verwendung des Rücksetzsignals, wobei das Rücksetzsignal erzeugt wird, bevor ein nächster Lichtimpuls empfangen wird.

**14.** Das Verfahren nach einem der Ansprüche 9 bis 13, wobei die Lichtimpulse durch eine Probe in Reaktion auf die Anregung durch Licht, das von einer Blitzlampe empfangen wird, erzeugt werden.

## Revendications

**1.** Système de détection (100) comprenant :

un système de détection d'absorbance (150) configuré pour générer une lumière qui présente une intensité lumineuse indicative d'une absorbance par un échantillon en réponse à une lumière d'excitation ; et
une pluralité de composants optiques configurés pour constituer un chemin optique depuis l'échantillon jusqu'à un circuit de mesure de photodétecteur comprenant :

un photodétecteur (102) configuré pour recevoir une lumière (101) qui présente une intensité lumineuse et pour générer un courant de photodétecteur qui présente un niveau de courant indicatif de l'intensité lumineuse, le photodétecteur comportant une première borne (102a) et une seconde borne (102b), le courant de photodétecteur circulant au travers du photodétecteur depuis la première borne en direction de la seconde borne ;
**caractérisé en ce que** le photodétecteur (102) comprend en outre :

un premier intégrateur (104) couplé le long d'un premier chemin de signal à la première borne (102a) du photodétecteur (102), le premier intégrateur étant configuré pour générer un premier signal de tension au niveau d'une première sortie d'intégrateur qui est indicatif d'une intégrale du niveau de courant de photodétecteur ;
un second intégrateur (106) couplé le long d'un deuxième chemin de signal à la seconde borne (102b) du photodétecteur (102), le second intégrateur étant configuré pour générer un deuxième signal de tension au niveau d'une seconde sortie d'intégrateur qui est indicatif d'une intégrale du niveau de courant de photodétecteur ; et
un amplificateur différentiel (108) configuré pour recevoir le premier signal de tension au niveau d'une première entrée d'amplificateur différentiel, pour recevoir le deuxième signal de tension au niveau d'une seconde entrée d'amplificateur différentiel et pour générer un troisième signal de sortie au niveau d'une sortie d'amplificateur différentiel qui est indicatif d'une différence entre le premier signal de tension et le deuxième signal de tension, l'amplificateur différentiel (108) étant en outre configuré pour émettre en sortie le troisième signal de tension le long d'un cinquième chemin de signal sur une entrée de fonction de conversion analogique-numérique ; dans lequel :
le photodétecteur (102) est une photodiode.

**2.** Système de détection (100) selon la revendication 1, comprenant en outre une connexion d'entrée de réinitialisation (112) connectée le long d'un chemin de signal de réinitialisation sur un premier commutateur d'intégrateur (206) configuré pour réinitialiser le premier intégrateur (104) et sur un second commutateur d'intégrateur (214) configuré pour réinitialiser le second intégrateur (106) lorsqu'un signal de réinitialisation est généré sur la connexion d'entrée de réinitialisation (112).

**3.** Système de détection (100) selon la revendication 1 ou 2, dans lequel :

le premier intégrateur (104) inclut un premier amplificateur opérationnel d'intégrateur (202) couplé à la première borne (102a) du photodétecteur (102) via le premier chemin de signal au niveau d'une borne négative du premier amplificateur opérationnel d'intégrateur, le premier amplificateur opérationnel d'intégrateur comprenant une première sortie d'amplificateur opérationnel en connexion en termes de signal avec la première sortie d'intégrateur ; et

le second intégrateur (106) inclut un second amplificateur opérationnel d'intégrateur (210) couplé à la seconde borne (102b) du photodétecteur (102) via le deuxième chemin de signal au niveau d'une borne négative du second amplificateur opérationnel d'intégrateur, le second amplificateur opérationnel d'intégrateur comprenant une seconde sortie d'amplificateur opérationnel en connexion en termes de signal avec la seconde sortie d'intégrateur.

**4.** Système de détection (100) selon la revendication 3, dans lequel :

le premier intégrateur (104) inclut un premier condensateur de rétroaction (C1) couplé à la borne négative du premier amplificateur opérationnel d'intégrateur (202) au niveau d'une première connexion de condensateur et à la première sortie d'amplificateur opérationnel au niveau d'une seconde connexion de condensateur, le premier condensateur de rétroaction présentant une valeur de capacité sélectionnée ; et

le second intégrateur (106) inclut un second condensateur de rétroaction (C2) couplé à la borne négative du second amplificateur opérationnel d'intégrateur (210) au niveau d'une première connexion de condensateur et à la seconde sortie d'amplificateur opérationnel au niveau d'une seconde connexion de condensateur, le second condensateur de rétroaction présentant approximativement la même valeur de capacité sélectionnée que le premier condensateur de rétroaction (C1).

**5.** Système de détection (100) selon la revendication 2 ou 3, dans lequel :

le premier intégrateur (104) inclut un premier condensateur de rétroaction (C1) connecté en parallèle au premier commutateur d'intégrateur (206) qui réinitialise le premier intégrateur, le premier condensateur de rétroaction comprenant une première connexion de condensateur connectée le long d'un premier chemin de signal de rétroaction d'amplificateur opérationnel à la borne négative d'un ou du premier amplificateur opérationnel d'intégrateur (202) et à une première borne de commutateur d'intégrateur du premier commutateur d'intégrateur (206), et une seconde connexion de condensateur connectée le long du chemin de signal de rétroaction à la première sortie d'amplificateur opérationnel et à une seconde borne de commutateur d'intégrateur du premier commutateur d'intégrateur, le premier condensateur de rétroaction (C1) présentant une valeur de capacité sélectionnée ; et

le second intégrateur (106) inclut un second condensateur de rétroaction (C2) connecté en parallèle au second commutateur d'intégrateur (214) qui réinitialise le second intégrateur, le second condensateur de rétroaction comprenant une première connexion de condensateur connectée le long d'un deuxième chemin de signal de rétroaction d'amplificateur opérationnel à la borne négative d'un ou du second amplificateur opérationnel d'intégrateur (210) et à une seconde borne de commutateur d'intégrateur du second commutateur d'intégrateur, et une seconde connexion de condensateur connectée le long du deuxième chemin de signal de rétroaction d'amplificateur opérationnel à la seconde sortie d'amplificateur opérationnel et à une seconde borne de commutateur d'intégrateur du second commutateur d'intégrateur, le second condensateur de rétroaction (C2) présentant approximativement la même valeur de capacité sélectionnée que le premier condensateur de rétroaction.

**6.** Système de détection (100) selon l'une quelconque des revendications précédentes, dans lequel l'amplificateur différentiel (108) comprend un amplificateur opérationnel d'amplificateur différentiel (220) qui comprend une entrée positive en communication en termes de signal avec la première entrée d'amplificateur différentiel et une entrée négative en communication en termes de signal avec la seconde entrée d'amplificateur différentiel.

**7.** Système de détection (100) selon la revendication 6, dans lequel :

l'entrée positive de l'amplificateur opérationnel d'amplificateur différentiel (220) est connectée à la première entrée d'amplificateur différentiel au niveau d'un premier diviseur de tension qui est formé par des première et deuxième résistances (222, 224) ; et

l'entrée négative de l'amplificateur opérationnel d'amplificateur différentiel (220) est connectée à la seconde entrée d'amplificateur différentiel au niveau d'un second diviseur de tension qui est formé par des troisième et quatrième résistances (226, 228), dans lequel les première, deuxième, troisième et quatrième résistances présentent sensiblement la même valeur de résistance.

8. Système de détection (100) selon l'une quelconque des revendications précédentes, dans lequel la fonction de convertisseur analogique-numérique inclut un convertisseur analogique-numérique de N bits (240) configuré pour générer un mot de données de N bits qui représente une valeur analogique du troisième signal de sortie, dans lequel, en particulier, la fonction de convertisseur analogique-numérique inclut un pilote de convertisseur analogique-numérique (242) configuré pour mettre à l'échelle la valeur analogique conformément à une plage dynamique du convertisseur analogique-numérique de N bits.

9. Procédé pour mesurer un niveau d'intensité lumineuse en utilisant un système de détection (100), en particulier un système de détection selon l'une quelconque des revendications précédentes, le système de détection comprenant :

un système de détection d'absorbance (150) configuré pour générer une lumière qui présente une intensité lumineuse indicative d'une absorbance par un échantillon en réponse à une lumière d'excitation ; et
une pluralité de composants optiques configurés pour constituer un chemin optique depuis l'échantillon jusqu'à un circuit de mesure de photodétecteur qui comporte un photodétecteur (102), le procédé comprenant :

la réception d'un signal lumineux au niveau du photodétecteur (102) ; et
la génération d'un courant de photodétecteur qui présente un niveau de courant de photodétecteur en réponse à l'intensité de signal lumineux depuis une première borne de photodétecteur (102a) jusqu'à une seconde borne de photodétecteur (102b) ;
**caractérisé en ce que** le procédé comprend en outre :

la détection du courant de photodétecteur au niveau d'une première entrée d'intégrateur au niveau de la première borne de photodétecteur (102a) ;
la génération d'un premier signal de sortie au niveau d'une première sortie d'intégrateur, le premier signal de sortie étant indicatif d'une intégrale du niveau de courant de photodétecteur ;
la détection du courant de photodétecteur au niveau d'une seconde entrée d'intégrateur au niveau de la seconde borne de photodétecteur (102b) ;
la génération d'un deuxième signal de sortie au niveau d'une seconde sortie d'intégrateur, le deuxième signal de sortie étant indicatif d'une intégrale du niveau de courant de photodétecteur ;
la réception du premier signal de sortie au niveau d'une entrée d'amplificateur différentiel positive et du deuxième signal de sortie au niveau d'une entrée d'amplificateur différentiel négative ;
la génération d'un troisième signal de sortie qui est indicatif de la différence entre le premier signal de sortie et le deuxième signal de sortie ; et l'émission en sortie du troisième signal de sortie sur un convertisseur analogique-numérique (110) ; dans lequel : le photodétecteur (102) est une photodiode.

10. Procédé selon la revendication 9, comprenant en outre :

la génération d'un signal de réinitialisation lorsque le convertisseur analogique-numérique (110) a généré une valeur numérique qui correspond au troisième signal de sortie ; et
la réinitialisation des premier et second intégrateurs (104, 106) en utilisant le signal de réinitialisation.

11. Procédé selon la revendication 10, dans lequel l'étape de réinitialisation des premier et second intégrateurs (104, 106) inclut :

la mise en court-circuit d'un premier condensateur de rétroaction (C1) dans le premier intégrateur (104) en déclenchant un premier commutateur d'intégrateur (206) dans un état fermé ; et
la mise en court-circuit d'un second condensateur de rétroaction (C2) dans le second intégrateur (106) en déclenchant un second commutateur d'intégrateur (214) dans l'état fermé.

12. Procédé selon la revendication 9, 10 ou 11, dans lequel :
le signal lumineux est reçu en tant que série d'impulsions lumineuses présentant une largeur de durée d'impulsion, dans lequel :

l'étape de génération du niveau de courant de photodétecteur inclut une étape de commencement consistant à générer le niveau de courant de photodétecteur lors d'un commencement de l'une des impulsions lumineuses ;

les étapes de détection du niveau de courant de photodétecteur au niveau des premier et second intégrateurs (104, 106) incluent l'initiation des étapes de détection des niveaux de courant de photodétecteur au commencement de l'une des impulsions lumineuses ;

les étapes de génération des premier et deuxième signaux de sortie incluent la génération des première et deuxième sorties à un niveau de signal qui correspond aux premier et second niveaux de signal de sortie qui sont présents à la conclusion de l'une des impulsions lumineuses ; et

la détection du niveau de courant de photodétecteur par les premier et second intégrateurs (104, 106) commence simultanément au commencement de l'impulsion lumineuse et les premier et deuxième signaux de sortie sont générés simultanément à la conclusion de l'impulsion lumineuse.

13. Procédé selon l'une quelconque des revendications 9 à 12, comprenant en outre :

la génération d'un signal de réinitialisation lorsque le convertisseur analogique-numérique (110) a généré une valeur numérique qui correspond au troisième signal de sortie ; et

la réinitialisation des premier et second intégrateurs (104, 106) en utilisant le signal de réinitialisation, dans lequel le signal de réinitialisation est généré avant la réception d'une impulsion lumineuse suivante.

14. Procédé selon l'une quelconque des revendications 9 à 13, dans lequel les impulsions lumineuses sont générées par un échantillon en réponse à une excitation par une lumière qui est reçue depuis une lampe flash.

Figure 1

Figure 2

**Figure 3**

EP 2 896 940 B1

Figure 4A

Figure 4B

**EP 2 896 940 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2343943 A
- US 20130082179 A1
- GB 2089028 A